# EUROPÄISCHE PATENTANMELDUNG

(11) **EP 3 299 118 A1**
(43) Veröffentlichungstag der Anmeldung: **28.03.2018**
(21) Anmeldenummer: 17180352.1
(22) Anmeldetag: 07.07.2017
(51) Int. Cl.: B23Q 1/01

(54) **BAUTEIL FÜR EINE MASCHINE**

(30) Priorität: 23.09.2016 DE 102016117975
(71) Anmelder: Datron AG, 64367 Mühltal-Traisa (DE)
(72) Erfinder: Dolze, Frank, 64293 Darmstadt (DE)
(74) Vertreter: Katscher Habermann Patentanwälte

(57) **Zusammenfassung**

Ein Bauteil (1) für eine Maschine weist ein Kraftübertragungselement (2) aus einem Faserverbundmaterial und ein Funktionselement (4) aus Mineralguss auf, wobei das Funktionselement (4) abschnittsweise an einer Außenfläche des Kraftübertragungselements (2) festgelegt ist. Das Funktionselement (4) kann stoffschlüssig an dem Kraftübertragungselement (2) festgelegt sein. Das Kraftübertragungselement (2) kann mindestens in einem Kontaktbereich mit dem Funktionselement (4) eine haftvermittelnde Schicht (5) und/oder Ausformungen für einen formschlüssigen verdrehfesten Eingriff mit dem Funktionselement (4) aufweisen. Das Kraftübertragungselement (2) ist zweckmäßigerweise ein rohrförmiges oder plattenförmiges Strukturelement aus Faserverbundmaterial und vorteilhafterweise ein Halbzeug. Das Kraftübertragungselement (2) besteht aus einem Kohlefaserkunststoffverbundmaterial. Das Funktionselement (4) weist mindestens eine ebene Funktionsfläche (7) zur Anbindung des Bauteils (1) an einen Antrieb oder an eine Führungseinrichtung auf. Mindestens ein Gewindeanker ist in dem Funktionselement (4) eingebettet und von einer Außenseite des Bauteils (1) aus zugänglich. Das Bauteil (1) kann mehrere Kraftübertragungselemente (2) und/oder mehrere Funktionselemente (4) aufweisen.

## Beschreibung

Die Erfindung betrifft ein Bauteil für eine Maschine mit einem Kraftübertragungselement aus einem Faserverbundmaterial.

Eine Maschine wie beispielsweise eine Arbeitsmaschine oder eine Werkzeugmaschine ist üblicherweise aus einer Anzahl von Bauteilen zusammengesetzt. Während einzelne Maschinenkomponenten ein möglichst stabiles Gestell oder einen Maschinenrahmen bilden, sollen andere Bauteile während einer bestimmungsgemäßen Nutzung der Maschine verlagert und bewegt werden. Um die jeweils unterschiedlichen Anforderungen an die einzelnen Bauteile der Maschine möglichst gut erfüllen zu können ist es bekannt, die einzelnen Bauteile aus unterschiedlichen Materialien herzustellen, die für den jeweiligen Einsatzzweck möglichst vorteilhafte Eigenschaften aufweisen. Zudem soll die Herstellung der einzelnen Bauteile sowie der daraus zusammengesetzten Maschine so kostengünstig wie möglich sein.

Für viele Anwendungsbereiche bei Arbeitsmaschinen und insbesondere bei Werkzeugmaschinen sind Metalle wie beispielsweise Stahl geeignete Materialien. Bauteile aus Metall lassen sich oftmals kostengünstig herstellen und weisen hinsichtlich der mechanischen Belastbarkeit, der Steifigkeit und Dämpfung oftmals ausreichend gute Eigenschaften auf. Allerdings weisen Bauteile aus Stahl üblicherweise ein hohes Eigengewicht auf, was sich insbesondere bei schnell zu bewegenden Bauteilen nachteilig auf das dynamische Verhalten der Maschine auswirken kann.

Aus der Praxis ist es deshalb bekannt, einzelne Bauteile aus Leichtbaumaterialien herzustellen oder mit Leichtbaukomponenten zu kombinieren, um deren Eigengewicht zu reduzieren. Durch die geringere Masse der mit Leichtbaumaterialien hergestellten Bauteile lässt sich eine höhere Dynamik beweglicher Bauteile bei gleicher oder gesteigerter Steifigkeit erreichen. Werden derartige Bauteile bei Arbeitsmaschinen oder Werkzeugmaschinen eingesetzt, sind oftmals größere Beschleunigungen der beweglichen Bauteile möglich, was zu einer höheren Bearbeitungsgeschwindigkeit und zu niedrigeren Taktzeiten bei sich wiederholenden Arbeitsvorgängen führt. Zudem kann mit derartigen Bauteilen aus Leichtbaumaterialien eine höhere dynamische Steifigkeit der Maschine erreicht werden, was zu einer Steigerung der Bearbeitungsgenauigkeit führt. Neben dünnwandigen Blechstrukturen und Metallschäumen werden zunehmend auch Faserkunststoffverbundmaterialien zur Herstellung von Bauteilen verwendet.

Ein aus Aluminium hergestelltes Bauteil weist ein vergleichsweise geringes Gewicht auf, kann aber oftmals nicht die bei beanspruchten Bauteilen anfallenden Anforderungen an die Steifigkeit und die Haltbarkeit erfüllen.

Aus der Praxis sind einzelne Versuche bekannt, ein Bauteil für eine Maschine aus einem Faserkunststoffverbundmaterial herzustellen. Das aus diesem Material hergestellte Bauteil weist ein sehr vorteilhaftes Verhältnis von einer hohen Steifigkeit zu einer geringen Masse des Bauteils auf. Zudem besitzen Bauteile aus einem Faserkunststoffverbundmaterial gute Dämpfungseigenschaften. Es hat sich jedoch gezeigt, dass in den meisten Fällen die Bauteile eine komplexe Formgebung aufweisen müssen, so dass aufwändige Herstellungsverfahren und in vielen Fällen eine überwiegend manuelle Fertigung der Bauteile aus Faserkunststoffverbundmaterial erforderlich werden. Zudem müssen die betreffenden Bauteile regelmäßig mit anderen Komponenten der Maschine verbunden werden und geeignete Befestigungselemente wie beispielsweise Gewindeabschnitte oder ebene Anlageflächen mit Ausnehmungen oder Hinterschneidungen aufweisen, um das Bauteil mit der Maschine verbinden zu können und eine bestimmungsgemäße Benutzung des Bauteils zu ermöglichen. Trotz der vorteilhaften Eigenschaften und der geringen Masse eines derartigen Bauteils aus einem Faserkunststoffverbundmaterial werden derartige Bauteile nur in seltenen Fällen eingesetzt, da der große Herstellungsaufwand regelmäßig einen wirtschaftlichen Einsatz dieser Bauteile verhindert.

Es wird deshalb als eine Aufgabe der vorliegenden Erfindung angesehen, ein Bauteil für eine Maschine so auszugestalten, dass ein geeignetes Faserverbundmaterial für die Herstellung des Bauteils genutzt werden kann und gleichzeitig eine kostengünstige und damit wirtschaftlich zweckmäßige Herstellung des Bauteils ermöglicht wird.

Diese Aufgabe wird gelöst mit einem erfindungsgemäßen Bauteil mit einem Kraftübertragungselement aus einem Faserverbundmaterial und mit einem Funktionselement aus Mineralguss, wobei das Funktionselement abschnittsweise an eine Außenfläche des Kraftübertragungselements festgelegt ist. Bei Mineralguss handelt es sich um einen Werkstoff, der ganz überwiegend aus mineralischen Füllstoffen wie beispielsweise Quarzgestein unterschiedlicher Korngrößen und Gesteinsmehl sowie aus einem geringen Anteil eines eine Matrix bildenden Kunststoffmaterials wie beispielsweise Polyesterharz oder Epoxidharz besteht. Das gemischte Rohmaterial kann als homogene Masse kalt in eine Gießform vergossen werden und härtet anschließend aus. Ein aus Mineralguss hergestelltes Funktionselement bietet bedingt durch das Herstellungsverfahren eine sehr große Gestaltungsfreiheit bei der Formgebung und eine hohe Abformgenauigkeit, die in Verbindung mit dem üblicherweise sehr geringen Schwund während des Aushärtens eine hochpräzise Herstellung komplexer Funktionsteile ermöglicht. Zudem weist Mineralguss ebenfalls eine hohe Steifigkeit und vorteilhafte Dämpfungseigenschaften auf. Das aus Mineralguss hergestellte Funktionselement kann für die Anbindung des Bauteils an weitere Maschinenkomponenten genutzt werden. Außerdem lassen sich mit geringen Kosten und ohne größeren Aufwand einzelne Einlegeteile wie beispielsweise Gewindehülsen oder andere Befestigungselemente in die für die Herstellung des Funktionselements verwendete Gussform einbringen und in das Funktionselement aus Mineralguss einbetten. Es können auch nachträglich Ausnehmungen wie beispielsweise Bohrungen oder Hinterschneidungen in das Funktionselement aus Mineralguss eingebracht werden, ohne dessen strukturelle Festigkeit übermäßig zu beeinträchtigen, wie es beispielsweise bei dem Kraftübertragungselement aus Faserverbundmaterial der Fall wäre.

Zudem hat sich gezeigt, dass eine ausreichend stabile und mechanisch belastbare Verbindung des Kraftübertragungselements aus Faserverbundmaterial und des Funktionselements aus Mineralguss mit vergleichsweise geringem Aufwand hergestellt werden kann. Das aus Faserverbundmaterial in Kombination mit Mineralguss hergestellte Bauteil weist eine geringere Masse als ein konventionell aus Stahl hergestelltes Bauteil auf. Gleichzeitig besitzt dieses Bauteil eine hohe Steifigkeit und gute Dämpfungseigenschaften, so dass sich das Bauteil insbesondere zur Verwendung als bewegliches Bauteil bei Arbeitsmaschinen und Werkzeugmaschinen eignet. Die Herstellung des Bauteils ist wesentlich kostengünstiger als die Herstellung eines vollständig aus Faserverbundmaterial hergestellten Bauteils.

Einer Ausgestaltung des Erfindungsgedankens zufolge ist vorgesehen, dass das Funktionselement stoffschlüssig an dem Kraftübertragungselement festgelegt ist. So können das Faserverbundmaterial und der Mineralguss dasselbe Kunststoffmaterial oder zumindest ein kompatibles Kunststoffmaterial aufweisen und das Kraftübertragungselement aus dem Faserverbundmaterial in die Vergussform für das Funktionselement eingebettet werden, so dass bei einer geeigneten Prozessführung eine stoffschlüssige Verbindung des an oder um das Kraftübertragungselement angegossenen Funktionselements entsteht.

Einer anderen Ausgestaltung des Erfindungsgedankens zufolge ist vorgesehen, dass das Kraftübertragungselement mindestens in einem Kontaktbereich mit dem Funktionselement eine haftvermittelnde Schicht aufweist. Die haftvermittelnde Schicht kann beispielsweise ein geeignetes Klebematerial sein, um in dem Kontaktbereich eine möglichst dauerhafte und mechanisch beanspruchbare Haftverbindung zwischen dem Kraftübertragungselement und dem Funktionselement herzustellen. Die haftvermittelnde Schicht kann auch durch das Auftragen eines geeigneten Kunststoff-Haftvermittlers hergestellt werden.

Es ist ebenso denkbar, dass die Oberfläche des Kraftübertragungselements in dem Kontaktbereich physikalisch oder chemisch behandelt wird, um eine feste Verbindung mit dem Funktionselement zu begünstigen. Die chemische Behandlung kann durch eine Beschichtung erfolgen, die vor dem Vergießen des Funktionselements aufgebracht wird und eine Veränderung der äußeren Lagen oder eines äußeren Bereichs des Kraftübertragungselements bewirkt, um eine zusätzliche Haftvermittlung zu erzeugen und eine möglichst feste, mechanisch beanspruchbare Verbindung mit dem Funktionselement zu begünstigen.

Es ist aus der Praxis ebenfalls bekannt, dass eine äußere Schicht des Kraftübertragungselements aus Faserverbundmaterial bzw. ein dafür vorgesehenes und außen angeordnetes Abreißgewebe vor dem Angießen des Funktionselements aus Mineralguss abgetrennt wird und dadurch die Oberfläche des Kraftübertragungselements in dem Kontaktbereich aufgeraut wird, um eine mechanisch belastbare und stabile Verbindung mit dem Funktionselement aus Mineralguss zu ermöglichen. Es sind auch andere Verfahren denkbar und geeignet, um die Oberfläche des Kraftübertragungselements in dem Kontaktbereich zu bearbeiten und insbesondere aufzurauen, um dadurch die Verbundwirkung mit dem Funktionselement aus Mineralguss zu erhöhen.

Es ist erfindungsgemäß ebenso möglich, dass das Kraftübertragungselement Ausformungen für einen formschlüssigen verdrehfesten Eingriff mit dem Funktionselement aufweist. Die Ausformungen können bereits während der Herstellung des Kraftübertragungselements aus Faserverbundmaterial vorgesehene Ausnehmungen, nach außen vorspringende Ausformungen wie beispielsweise Laschen oder Zungen oder aber räumlich begrenzte Verdickungen oder Oberflächenprofilierungen sein.

Im Hinblick auf möglichst geringe Herstellungskosten für das erfindungsgemäße Bauteil ist vorgesehen, dass das Kraftübertragungselement mindestens ein Strukturelement aufweist, das ein vorgefertigtes Profilelement aus Faserverbundmaterial ist. Bei dem Profilelement, das einen über eine Länge des Profilelements hinweg gleichbleibenden Querschnitt aufweist, kann es sich beispielsweise um ein Profilelement mit einem I-förmigen, T-förmigen, H-förmigen, U-förmigen, L-förmigen oder C-förmigen Querschnitt handeln. Derartige Profilelemente aus Faserverbundmaterial sind in verschiedenen Ausgestaltungen, Abmessungen und Faserverbundmaterialien vorkonfektioniert und kostengünstig erhältlich.

Es ist ebenso gemäß einer Ausgestaltung des Erfindungsgedankens möglich, dass das Kraftübertragungselement ein rohrförmiges oder plattenförmiges Strukturelement aus Faserverbundmaterial aufweist. Es hat sich gezeigt, dass insbesondere ein rohrförmiges Strukturelement aus Faserverbundmaterial die Vorteile einer kostengünstigen Herstellung und gleichzeitig guter Kraftübertragungseigenschaften sowie Steifigkeit und geringes Eigengewicht miteinander kombiniert. Für die Herstellung rohrförmiger Strukturelemente aus Faserverbundmaterial sind zahlreiche Verfahren bekannt. Oftmals ist ein geeignetes rohrförmiges oder plattenförmiges Strukturelement handelsüblich erhältlich und auf Grund hoher Stückzahlen bei deren Herstellung sehr kostengünstig.

In besonders vorteilhafter Weise ist erfindungsgemäß vorgesehen, dass das Strukturelement ein Halbzeug ist. Da die Anbindung des Kraftübertragungselements an weitere Komponenten der Maschine über das Funktionselement aus Mineralguss erfolgt, muss das Kraftübertragungselement keine aufwändig bearbeitete oder vergütete Oberfläche aufweisen. Zudem kann bei dem Kraftübertragungselement auf kostengünstige und handelsüblich erhältliche Grundformen zurückgegriffen werden, da die für das jeweilige Bauteil und dessen Verwendungszweck vorgesehene Formgebung durch das Funktionselement aus Mineralguss erzeugt werden kann.

Es hat sich gezeigt, dass es für viele Anwendungsbereiche vorteilhaft ist, dass das Kraftübertragungselement aus einem Kohlefaserkunststoffverbundmaterial besteht. Im Vergleich zu anderen Fasermaterialien weisen Kohlefaserkunststoffverbundmaterialien besonders vorteilhafte Eigenschaften bezüglich der Steifigkeit und der Masse des daraus hergestellten Kraftübertragungselements auf.

Gemäß einer besonders vorteilhaften Ausgestaltung des Erfindungsgedankens ist vorgesehen, dass ein erster Längenausdehnungskoeffizient des für das Kraftübertragungselement verwendeten Faserverbundmaterials und ein zweiter Längenausdehnungskoeffizient des für das Funktionselement verwendeten Mineralgusses möglichst gleich sind und eine Differenz zwischen dem ersten und dem zweiten Ausdehnungskoeffizient geringer als der kleinere Ausdehnungskoeffizient ist, vorzugsweise geringer als 50% des kleineren Ausdehnungskoeffizienten ist. Durch eine geeignete Materialwahl können ein Faserverbundmaterial und ein Mineralguss miteinander kombiniert werden, deren Ausdehnungskoeffizienten weitgehend übereinstimmen oder sich nur geringfügig unterscheiden, so dass bei einer thermisch bedingten unvermeidbaren Ausdehnung des Kraftübertragungselements und des Funktionselements keine übermäßigen Ausdehnungsdifferenzen entstehen, die zu mechanischen Spannungen in dem Bauteil und zu einer dadurch verursachten Verformung des Bauteils führen könnten.

Erfindungsgemäß ist vorgesehen, dass das Funktionselement mindestens eine ebene Funktionsfläche zur Anbindung des Bauteils an einen Antrieb oder eine Führungseinrichtung aufweist. Das Vergießen des Funktionselements aus Mineralguss bietet in einfacher Weise und ohne eine aufwändige Nachbearbeitung die Möglichkeit, sehr ebene Funktionsflächen zu erzeugen, die eine präzise Ausrichtung und dauerhafte Festlegung des Funktionselements und damit des gesamten Bauteils an weiteren Komponenten der Maschine ermöglichen. Um eine hochgenaue und dynamische Führung beweglicher Komponenten der Maschine zu ermöglichen ist es vorteilhaft, das erfindungsgemäße Bauteil mit ebenen Funktionsflächen zu versehen, die für die Anbindung an einen Antrieb oder eine Führungseinrichtung geeignet sind. Die Genauigkeit kann gegebenenfalls durch Abformverfahren oder durch Überarbeiten mittels Fräsen oder Schleifen weiter erhöht werden.

Es ist erfindungsgemäß weiterhin vorgesehen, dass mindestens ein Einlegeteil in dem Funktionselement eingebettet und von einer Außenseite des Bauteils aus zugängig ist. Bei dem Einlegeteil kann es sich beispielsweise um Gewindeanker, um Schienen, um Profile, um Hülsen oder um Flansche handeln. Ein Gewindeanker kann wiederum beispielsweise eine Gewindehülse oder ein Gewindestab aus Metall sein. Das Einbetten eines Gewindeankers oder eines anderen Funktionsteils in dem Funktionselement aus Mineralguss ist ohne größeren Aufwand kostengünstig möglich.

Gemäß einer vorteilhaften Ausgestaltung des Erfindungsgedankens kann das Bauteil mehrere Kraftübertragungselemente und/oder mehrere Funktionselemente aufweisen. In vielen Fällen ist es zweckmäßig, dass das Bauteil ein Kraftübertragungselement aufweist, an dem an entgegengesetzten Enden zwei Funktionselemente aus Mineralguss angeformt sind. Es ist ebenfalls möglich, dass mehrere gleichartige oder unterschiedliche Kraftübertragungselemente über zwei oder ebenfalls mehrere beabstandet zueinander angeordnete Funktionselemente miteinander verbunden sind und mit anderen Maschinenkomponenten verbunden werden können.

Die Erfindung betrifft auch eine Maschine wie beispielsweise eine Arbeitsweise oder insbesondere eine Werkzeugmaschine. Erfindungsgemäß ist vorgesehen, dass die Maschine ein bewegliches Maschinenbauteil mit den vorangehend beschriebenen Merkmalen und Eigenschaften aufweist. Eine derartige Maschine ermöglicht eine gesteigerte Bearbeitungsgenauigkeit und eine Verbesserung der Prozessstabilität während ihrer Nutzung. Gleichzeitig ist durch die Verwendung von Leichtbaumaterialien und der dadurch reduzierten Masse des beweglichen Bauteils ein geringerer Leistungsbedarf für den Bewegungsantrieb des beweglichen Bauteils notwendig, was zu einem reduzierten Energiebedarf während des Betriebs der Maschine führt.

Erfindungsgemäß ist vorgesehen, dass das bewegliche Maschinenbauteil relativ zu einer anderen Maschinenkomponente längs einer Führungseinrichtung verlagerbar und/oder um eine Drehachse drehbar ist. Die andere Maschinenkomponente kann eine mit dem beweglichen Bauteil in unmittelbarer Wirkverbindung stehende Maschinenkomponente oder aber das ortsfeste Maschinenbett sein. Das bewegliche Maschinenbauteil ist in vielen Fällen deutlich kleiner und leichter als andere ortsfeste und unbewegliche Komponenten der Maschine wie beispielsweise das Maschinenbett. Die Verlagerung des erfindungsgemäß besonders leicht und gleichzeitig steif ausgeführten beweglichen Maschinenbauteils ist mit geringeren Beschleunigungskräften verbunden, wodurch sich die dynamischen Eigenschaften der erfindungsgemäß ausgestatteten Maschine verbessern lassen.

Gemäß einer besonders vorteilhaften Ausgestaltung des Erfindungsgedankens ist vorgesehen, dass die Maschine eine Werkzeugmaschine ist und das bewegliche Maschinenbauteil eine verlagerbare Verfahrachse oder Werkzeugspindelaufnahme ist. Bei dem beweglichen Maschinenbauteil kann es sich beispielsweise um ein Portal einer Portalfräsmaschine handeln. Insbesondere bei großdimensionierten Werkzeugmaschinen, bei denen die erfindungsgemäß ausgestalteten beweglichen Maschinenbauteile entsprechend große Abmessungen von beispielsweise einem Meter und mehr aufweisen, lassen sich durch die Kombination von Kraftübertragungselementen aus Faserverbundmaterial und Funktionselementen aus Mineralguss erhebliche Kosteneinsparungen bei gleichzeitig verbesserten Funktionseigenschaften erzielen.

Es ist ebenfalls möglich, dass das Bauteil ein beweglicher Roboterarm eines automatisierten Roboters oder ein Greifarm einer automatisierten Greifvorrichtung ist. Das Bauteil kann in vielen verschiedenen Maschinen in jeweils unterschiedlichen Funktionen und Bewegungsabläufen vorteilhaft eingesetzt werden.

Nachfolgend werden Ausführungsbeispiele des Erfindungsgedankens näher erläutert, die exemplarisch in der Zeichnung dargestellt sind. Es zeigt:
Fig. 1 eine perspektivische Ansicht eines Bauteils für eine Maschine mit einem rohrförmigen Kraftübertragungselement aus einem Kohlfaserkunststoffverbundmaterial und mit einem das Kraftübertragungselement teilweise umgebenden Funktionselement aus Mineralguss,
Fig. 2 eine Schnittansicht des in Fig. 1 dargestellten Bauteils längs der Linie II-II in Fig. 1,
Fig. 3 eine perspektivische Darstellung eines abweichend ausgestalteten erfindungsgemäßen Bauteils, das als verlagerbares Portal einer Portalfräsmaschine eingesetzt werden kann,
Fig. 4 eine Schnittansicht des in Fig. 3 dargestellten Bauteils längs der Linie IV-IV in Fig. 3, und
Fig. 5 eine weitere Schnittansicht des in Fig. 3 dargestellten Bauteils längs der Linie V-V in Fig. 3.

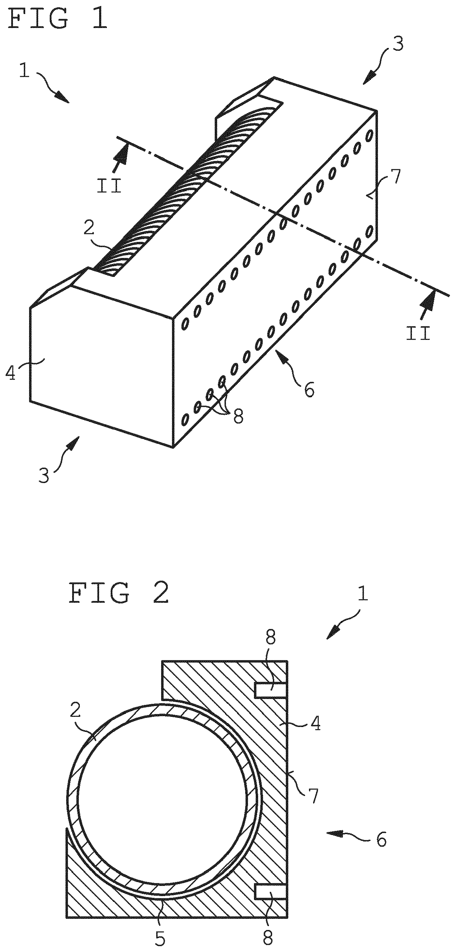

Ein in den Fig. 1 und 2 schematisch dargestelltes Bauteil 1 für eine nicht näher dargestellte Maschine weist ein rohrförmiges Kraftübertragungselement 2 auf, das aus einem Kohlefaserkunststoffverbundmaterial besteht. Das Kraftübertragungselement 2 ist ein rohrförmiges Halbzeug, das handelsüblich erhältlich ist und ohne nennenswerten Bearbeitungsaufwand für das erfindungsgemäße Bauteil 1 verwendet werden kann.

Das Kraftübertragungselement 2 ist in Umfangsrichtung teilweise und in dem dargestellten Ausführungsbeispiel über einen Umfangswinkel von nahezu 270° sowie an den jeweiligen Stirnseiten 3 von einem Funktionselement 4 umgeben, das aus einem geeigneten Mineralguss hergestellt ist. Der Mineralguss weist einen Gehalt von mehr als 90 % von mineralischen Partikeln wie beispielsweise Quarzgestein unterschiedlicher Korngrößen und Gesteinsmehl auf, die in eine Kunststoffmatrix aus einem geeigneten Epoxidharz eingebettet sind. Das Funktionselement 4 wird durch Kaltvergießen eines Rohmaterials des Mineralgusses in eine geeignete Werkzeugform hergestellt. Das Kraftübertragungselement 2 ist in einem Kontaktbereich mit dem Funktionselement 4 mit einer geeigneten haftvermittelnden Schicht 5 umgeben und in das Gießwerkzeug für das Funktionselement 4 aus Mineralguss eingelegt. Das Funktionselement 4 ist nach dem Aushärten des Mineralgusses hochfest mit dem Kraftübertragungselement 2 verbunden.

Das Funktionselement 4 weist an einer Außenseite 6 eine hochpräzise ebene Anlagefläche 7 auf. In dem Bereich der Anlagefläche 7 sind Gewindeanker 8 als Einlegeteile vor bzw. während des Vergießens des Funktionselements eingebracht worden, die zur Festlegung des Bauteils 1 an weiteren Komponenten der nicht dargestellten Maschine geeignet und vorgesehen sind.

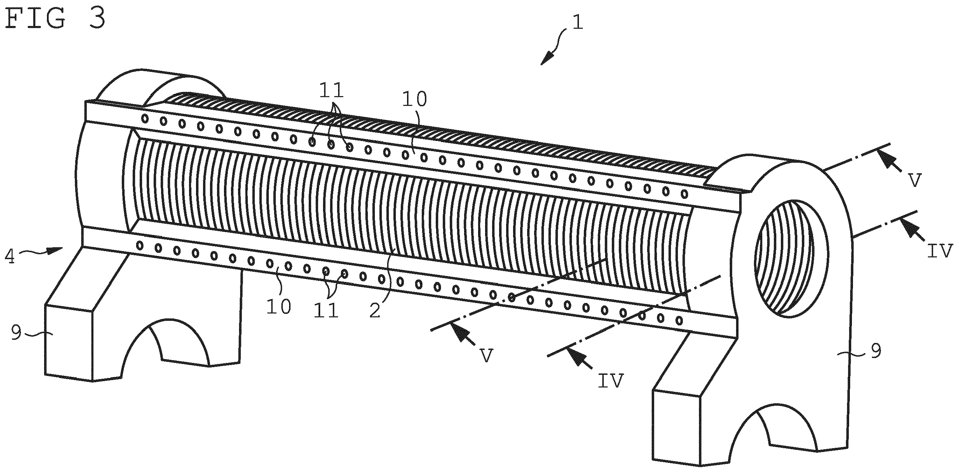

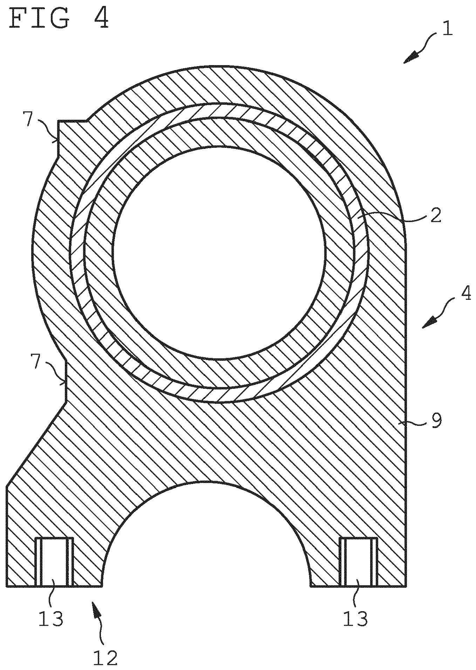

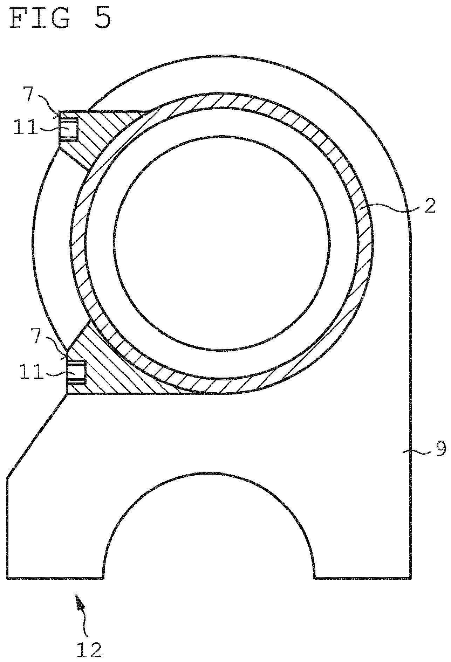

In den Fig. 3 bis 5 ist ein abweichend ausgestaltetes Ausführungsbeispiel für ein ebenfalls erfindungsgemäßes Bauteil 1 dargestellt. Das rohrförmige Kraftübertragungselement 2 aus einem Kohlefaserkunststoffverbundmaterial ist im Wesentlichen an seinen Stirnseiten 3 von einem jeweils ständerartig ausgebildeten Funktionselementbereich 9 umgeben. Zwischen den beiden Funktionselementbereichen 9 sind parallel zu einer Mittenachse des Kraftübertragungselements 2 verlaufende stegartige Funktionselementabschnitte 10 angeordnet. Die Funktionselementbereiche 9 und die Funktionselementabschnitte 10 können wie bei dem in Fig. 3 bis 5 exemplarisch dargestellten Ausführungsbeispiel gemeinsam einstückig hergestellt und als verschiedene Bereiche eines einzigen Funktionselements 4 hergestellt sein, oder aber auch jeweils gesondert hergestellt werden und nachträglich an dem Kraftübertragungselement 2 festgelegt und miteinander verbunden werden. Es ist ebenfalls möglich, dass die Funktionselementbereiche 9 und die Funktionselementabschnitte 10 bzw. eine Anzahl von Funktionselementabschnitten 10 jeweils isoliert voneinander ausgebildet und jeweils mit dem Kraftübertragungselement verbunden, bzw. daran festgelegt sind.

Die beiden stegartigen Funktionselemente 10 weisen jeweils eine fluchtend zueinander ausgebildete ebene Anlagefläche 7 auf. In die Anlagefläche 7 sind zwischen den beiden Stirnseiten 3 jeweils eine Anzahl von Gewindehülsen 11 in regelmäßigen Abständen zueinander eingebettet. Die von außen zugänglichen Gewindehülsen 11 können zur Festlegung einer weiteren Maschinenkomponente wie beispielsweise einer Führungseinrichtung für einen längs des Kraftübertragungselements 2 verlagerbaren Werkzeugschlitten dienen. An einer Unterseite 12 der ständerartig ausgebildeten Funktionselemente 9 sind ebenfalls Gewindehülsen 13 eingebettet, die beispielsweise zur Festlegung des Bauteils 1 an einer Verschiebeeinheit verwendet werden können. Das in den Fig. 3 bis 5 dargestellte Bauteil 1 kann als Portal einer Portalfräsmaschine verwendet werden und weist neben dem als Halbzeug verwendeten rohrförmigen Kraftübertragungselement 2 aus Kohlefaserkunststoffverbundmaterial nur einen mengenmäßig geringen Anteil an zusätzlichen Funktionselementen 9, 10 aus Mineralguss auf. Es ist ebenfalls möglich, dass bei komplexen Bauteilen der Anteil von Funktionselementen 9, 10 aus Mineralguss den Anteil des mindestens einen Kraftübertragungselements 2 mengenmäßig, volumenmäßig oder gewichtsmäßig übersteigt.

Das in den Fig. 1 und 2 dargestellte Bauteil 1 und insbesondere das in den Fig. 3 bis 5 dargestellte Bauteil 1 stellen jeweils kostengünstig herstellbare Komponenten einer Maschine dar, die trotz des geringen Eigengewichts der Bauteile 1 sehr vorteilhafte Eigenschaften hinsichtlich der Steifigkeit und des Dämpfungsverhaltens der Bauteile 1 aufweisen.

## Patentansprüche

1. Bauteil (1) für eine Maschine mit einem Kraftübertragungselement (2) aus einem Faserverbundmaterial und mit einem Funktionselement (4) aus Mineralguss, wobei das Funktionselement (4) abschnittsweise an einer Außenfläche des Kraftübertragungselements (2) festgelegt ist.

2. Bauteil (1) nach Anspruch 1, **dadurch gekennzeichnet, dass** das Funktionselement (4) stoffschlüssig an dem Kraftübertragungselement (2) festgelegt ist.

3. Bauteil (1) nach Anspruch 1 oder Anspruch 2, **dadurch gekennzeichnet, dass** das Kraftübertragungselement (2) mindestens in einem Kontaktbereich mit dem Funktionselement (4) eine haftvermittelnde Schicht (5) aufweist.

4. Bauteil (1) nach einem der vorangehenden Ansprüche, **dadurch gekennzeichnet, dass** das Kraftübertragungselement (2) Ausformungen für einen formschlüssigen verdrehfesten Eingriff mit dem Funktionselement (4) aufweist.

5. Bauteil (1) nach einem der vorangehenden Ansprüche, **dadurch gekennzeichnet, dass** das Kraftübertragungselement (2) mindestens ein Strukturelement aufweist, das ein vorgefertigtes Profilelement aus Faserverbundmaterial ist.

6. Bauteil (1) nach einem der vorangehenden Ansprüche, **dadurch gekennzeichnet, dass** das Kraftübertragungselement (2) ein rohrförmiges oder plattenförmiges Strukturelement aus Faserverbundmaterial aufweist.

7. Bauteil (1) nach Anspruch 5 oder Anspruch 6, **dadurch gekennzeichnet, dass** das Strukturelement ein Halbzeug ist.

8. Bauteil (1) nach einem der vorangehenden Ansprüche, **dadurch gekennzeichnet, dass** das Kraftübertragungselement (2) aus einem Kohlefaserkunststoffverbundmaterial besteht.

9. Bauteil (1) nach einem der vorangehenden Ansprüche, **dadurch gekennzeichnet, dass** ein erster Ausdehnungskoeffizient des für das Kraftübertragungselement (2) verwendeten Faserverbundmaterials und ein zweiter Ausdehnungskoeffizient des für das Funktionselement (4) verwendeten Mineralgusses möglichst gleich sind und eine Differenz zwischen dem ersten und dem zweiten Ausdehnungskoeffizient geringer als der kleinere Ausdehnungskoeffizient ist, vorzugsweise geringer als 50% des kleineren Ausdehnungskoeffizienten ist.

10. Bauteil (1) nach einem der vorangehenden Ansprüche, **dadurch gekennzeichnet, dass** das Funktionselement (4) mindestens eine ebene Funktionsfläche (7) zur Anbindung des Bauteils (1) an einen Antrieb oder an eine Führungseinrichtung aufweist.

11. Bauteil (1) nach einem der vorangehenden Ansprüche, **dadurch gekennzeichnet, dass** mindestens ein Einlegeteil in dem Funktionselement (4) eingebettet und von einer Außenseite des Bauteils (1) aus zugänglich ist.

12. Bauteil (1) nach einem der vorangehenden Ansprüche, **dadurch gekennzeichnet, dass** das Bauteil (1) mehrere Kraftübertragungselemente (2) und/oder mehrere Funktionselemente (4) aufweist.

13. Maschine mit einem beweglichen Maschinenbauteil (1) nach einem der Ansprüche 1 bis 12.

14. Maschine nach Anspruch 13, wobei das bewegliche Maschinenbauteil (1) relativ zu einer anderen Maschinenkomponente längs einer Führungseinrichtung verlagerbar und/oder um eine Drehachse drehbar ist.

15. Maschine nach Anspruch 14, wobei die Maschine eine Werkzeugmaschine ist und das bewegliche Maschinenbauteil (1) eine verlagerbare Verfahrachse oder Werkzeugspindelaufnahme ist.
